# EUROPÄISCHE PATENTSCHRIFT

(11) **EP 1 681 111 B1**
(45) Veröffentlichungstag und Bekanntmachung des Hinweises auf die Patenterteilung: **23.07.2008**
(21) Anmeldenummer: 06005046.5
(22) Anmeldetag: 27.02.2003
(51) Int. Cl.: B21D 43/10, B21D 43/26, B21D 5/02, B21D 5/00, B21D 43/00

(54) **Verfahren zum Betrieb einer Fertigungseinrichtung**
Method for operating a manufacturing device
Méthode d'utilisation d'un dispositif de fabrication

(30) Priorität: 13.05.2002 AT 7312002
(43) Veröffentlichungstag der Anmeldung: 19.07.2006
(62) Teilanmeldung aus: 03704095.3
(73) Patentinhaber: Trumpf Maschinen Austria GmbH & CO. KG., 4061 Pasching (AT)
(72) Erfinder: Strasser, Hagen, 4061 Pasching (AT); Theis, Helmut, 4540 Pfarrkirchen (AT); Bongardt, Thomas, 80939 München (DE); Wünsch, Georg, 80797 München (DE)
(74) Vertreter: Secklehner, Günter

(56) Entgegenhaltungen:
- EP-A- 0 125 331
- EP-A- 0 914 879
- EP-A- 1 222 975
- AT-B- 402 372
- US-A- 4 706 491
- US-A- 5 761 940
- US-A- 6 067 862

## Beschreibung

Die Erfindung betrifft ein Verfahren zum Betrieb einer Fertigungseinrichtung, wie im Oberbegriff des Anspruches 1 beschrieben.

Aus der gattungsbildenden AT 402 372 B ist für das Zuführen von Werkstücken zu einer Biegepresse mittels Manipulator eine an der Fertigungseinrichtung angebrachte Detektorvorrichtung bekannt, mittels der die Lage einer Werkstückkante hinsichtlich der Parallelität zu einer Arbeitsebene gemessen wird und bei Auftreten einer Winkellage eine Nachjustierung durch die Manipulationsvorrichtung vorgenommen wird. Ausgehend von der so ermittelten Referenzlage werden die nachfolgenden Biegeoperationen durch Positionsberechnung und Neupositionierung durchgeführt. Dabei kann es beim Verfahren in die Biegeposition durch die dabei auftretenden Beschleunigungskräfte bei der endgültigen Positionierung zwischen den Biegewerkzeugen zu Werkstückverschiebungen in der Greifeinrichtung kommen, wodurch ebenfalls beim Biegen Ungenauigkeiten auftreten können.

Aus der AT 401 026 B ist eine Blechbiegemaschine mit einer Manipulatorvorrichtung und einer Steuereinrichtung um Werkstücke in aufeinander folgenden Biegepositionen zwischen Biegewerkzeugen zu positionieren; bekannt. Bei dieser bekannten Biegemaschine wird ein vorbestimmter Fertigungsablauf in die Steuereinrichtung eingegeben und danach das Werkstück aufgrund der Daten in einer ersten Biegeoperation in der Biegemaschine positioniert und die Positionierung des Werkstückes in der Biegepresse für jede weitere Biegeoperation aus Daten der vorhergehenden Position bestimmt und danach die weitere Positionierung vorgenommen. Nachteilig dabei ist, dass es bei Ungenauigkeiten beim Erfassen des Werkstückes durch die Greifvorrichtung aus einer Ablageposition zu Biegeungenauigkeiten kommt, die sich in Folge bei jeder der Folgeoperationen auswirkt und damit das Werkstück unbrauchbar ist.

Aus DE 34 07 445 A1 sind zur Werkteilpositionierung für das Ergreifen durch eine Greifeinrichtung eines Manipulators an der Biegepresse angeordnete steuerbare, in drei Achsrichtungen verstellbare Konsolen mit Festanschlägen bekannt gegen die die Werkteile zwecks einer Vorpositionierung vor dem Ergreifen für den Biegevorgang gedrückt werden. Die Vorrichtungen sind sehr aufwendig und wird durch diesen Vorgang die Taktzeit verlängert.

Vorteilhaft sind weiters die Ausbildungen gemäß den Ansprüchen 2 bis 10, wodurch konstruktiv sehr aufwendige und kostenintensive mechanische Einrichtungen, die zudem mit einem hohen Antriebs- und Steuerungsaufwand verbunden sind, entfallen können, und durch die damit erzielte berührungslose Positionierung der Platine sehr kurze Taktzeiten erreicht werden.

Aufgabe der Erfindung ist es, ein Verfahren zum Betrieb einer Fertigungseinrichtung zu schaffen, mit dem ein vereinfachter Zuführvorgang für bereitgelegte Platinen für die Biegeoperation an einer Biegepresse zur Erzielung einer kurzen Taktzeit bei hoher Positioniergenauigkeit erreicht wird.

Diese Aufgabe der Erfindung wird mit den kennzeichnenden Maßnahmen im Anspruch 1 gelöst. Der überraschende Vorteil dabei ist, dass dadurch einerseits aufwendige Zuführ- und Bereitstellungseinrichtungen zum Aufnehmen der Platine durch die Greifeinrichtung der Handhabungseinrichtung entfallen können und andererseits eine Vorkontrolle durch einen Ist/Sollvergleich vorgenommen wird, womit Qualitätserfordernisse sichergestellt werden.

Vorteilhafte Maßnahmen beschreiben auch die Ansprüche 2 bis 5, weil dadurch fehlerhafte Erfassungsdaten wirkungsvoll vermieden werden.

Schließlich ist auch ein Vorgehen nach Anspruch 6 vorteilhaft, weil dadurch eine Werkzeugidentifikation und Positionsbestimmung erfolgt wodurch Produktionsausfälle durch Fehlbiegungen vermieden werden und zur Taktzeitoptimierung Verfahrwege eingespart werden.

Zum besseren Verständnis der Erfindung wird diese anhand der in den Figuren dargestellten Ausführungsbeispiele näher erläutert.

Es zeigen:
- Fig. 1: eine Fertigungseinrichtung zur Durchführung des erfindungsgemäßen Verfahrens, in schematischer Darstellung;
- Fig. 2: eine Handhabungseinrichtung der Fertigungseinrichtung in schematischer Darstellung;
- Fig. 3: eine Positioniereinrichtung der Fertigungseinrichtung in schematischer Darstellung;
- Fig. 4: ein Detail der Positioniereinrichtung geschnitten gemäß den Linien IV-IV in Figur 5;
- Fig. 5: die Positioniereinrichtung gemäß Figur 4 in Draufsicht;
- Fig. 6: eine schaubildliche Darstellung zum Positionieren der Platine in der Positioniereinrichtung;
- Fig. 7: eine Detaildarstellung eines Drehübertragers für Steuersignale und einem Medium der Handhabungseinrichtung geschnitten;
- Fig. 8: eine Detaildarstellung einer Erfassungseinrichtung;
- Fig. 9: eine schematische Darstellung einer Positioniervorrichtung;
- Fig. 10: eine Anordnung eines Messsystems für die Kalibrierung der Handhabungsvorrichtung der Fertigungseinrichtung in schematischer Darstellung;
- Fig. 11: eine Detailansicht des Messsystems und eines Referenzkörpers der Fertigungseinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

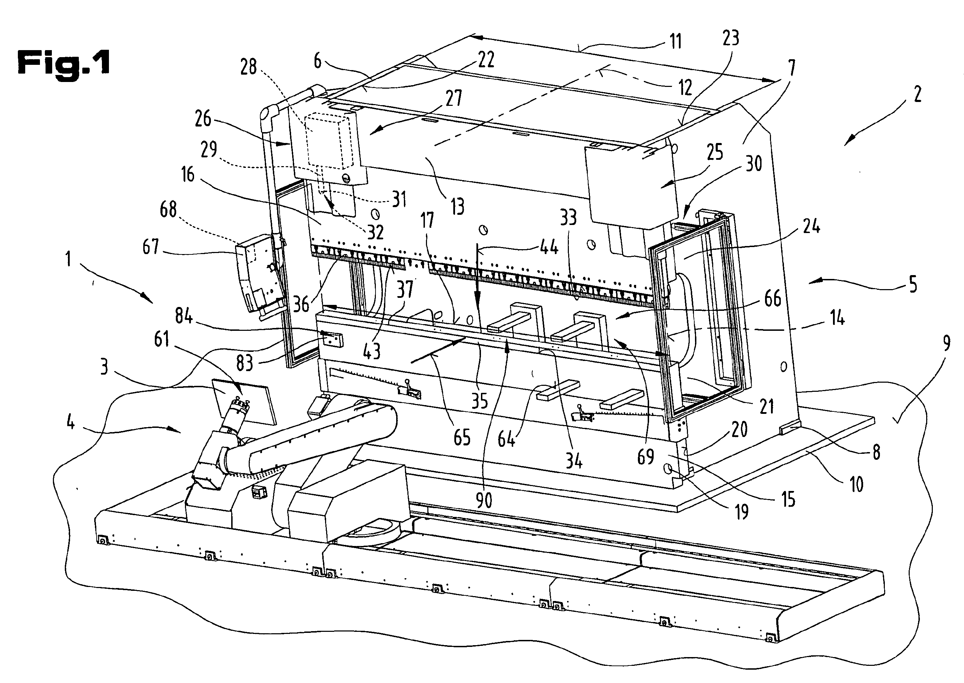

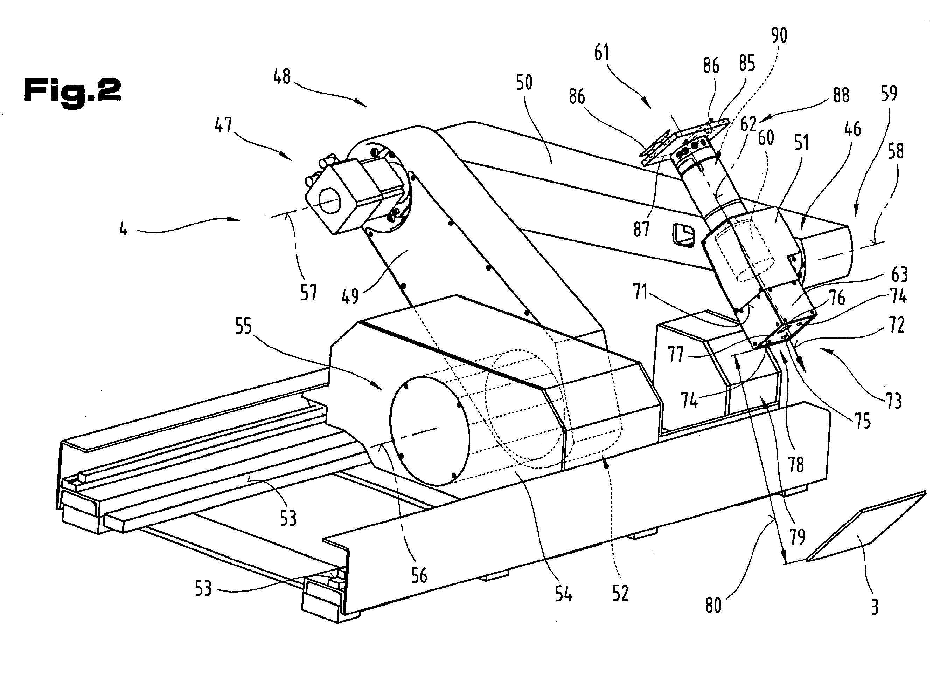

In den Fig. 1 und 2 ist eine Fertigungseinrichtung 1 mit einer Biegepresse 2, für das Umformen, insbesondere von Platinen 3, z.B. zu Gehäuseteilen, Profilen etc. und mit einer Handhabungsvorrichtung 4 gezeigt, wobei durchaus derartige Fertigungseinrichtungen 1 auch für die Herstellung langgestreckter Profile, z.B. Winkelprofil, U-Profil, Z-Profil etc. mit einem im allgemeinen sehr großen Längen/Querschnittsverhältnis Verwendung finden.

Ein Maschinengestell 5 der Fertigungseinrichtung 1 besteht im wesentlichen aus zwei parallel und in Abstand zueinander angeordneten, C-förmig gestalteten Ständer-Seitenwangen 6, 7, die direkt oder bei Bedarf z.B. über Dämpfungselemente 8 auf einer Aufstandsfläche 9 abgestützt oder in einer weiteren Ausführungsform, wie beispielhaft gezeigt, auf einer gemeinsamen Bodenplatte 10 befestigt, insbesondere mit dieser verschweißt sind. Weiters sind die Ständer-Seitenwangen 6, 7 miteinander in einem Abstand 11 über zu einer Mittelebene 12 senkrecht verlaufende Wandteile 13 verbunden.

In bezug auf eine zu der Aufstandsfläche 9 senkrecht verlaufenden Biegeebene 14 weist die Fertigungseinrichtung 1 zwei in der Biegeebene 14 einander gegenüberliegende Pressenbalken 15, 16 auf, die sich über eine Länge 17 erstrecken, die generell von der vorgesehenen Maschinengröße bzw. der vorgesehenen Arbeitslänge für das Biegen der Platine 3 festgelegt ist.

Der der Aufstandsfläche 9 zugewandte Pressenbalken 15 ist über eine Befestigungsanordnung 19 am Maschinengestell 5, bevorzugt direkt an Stirnflächen 20 von der Bodenplatte 10 zugeordneten Schenkeln 21 der C-förmigen Seitenwangen 6, 7 befestigt, insbesondere mittels Schweißverbindung. An Seitenflächen 22, 23 der von der Aufstandsfläche 9 beabstandeten Schenkeln 24 der C-förmigen Ständer-Seitenwangen 6, 7 sind durch ein Druckmedium beaufschlagbare Stellantriebe 25, 26 der Antriebsanordnung 27, gebildet aus doppelt wirkenden Hydraulikzylindern 28, angeordnet. Stellelemente 29, z.B. Kolbenstangen der Hydraulikzylinder 28, sind mit dem in Führungsanordnungen 30 des Maschinengestells 5 in der Biegeebene 14 verstellbar gelagerten Pressenbalken 16 über Gelenklager 31 und z.B. Bolzen 32 antriebsverbunden. Der Pressenbalken 15 und der Pressenbalken 16 erstrecken sich über die Länge 17 in etwa symmetrisch und in senkrechter Richtung zur Mittelebene 12, wobei die Länge 17 geringfügig größer als der Abstand 11 ist.

Auf einander zugewandten und zur Arbeitsebene 14 parallel verlaufenden Stirnflächen 33, 34 weisen die Pressenbalken 15, 16 Werkzeugaufnahmen 35 zur Abstützung und lösbaren Befestigung von Biegewerkzeugen 36, 37 auf. Wie aus dem Stand der Technik bekannt, bilden diese Biegewerkzeuge 36, 37 im allgemeinen ein als Matrize ausgebildetes Biegegesenk und einen als Patrize ausgebildeten Biegestempel aus. Aus dem Stand der Technik ist es weiters bekannt, die Biegewerkzeuge 36, 37 in Sektionen zu unterteilen, wodurch sich eine leichte Variierbarkeit für eine Werkzeuglänge ergibt, um diese den jeweiligen Erfordernissen anpassen zu können bzw. auch um die Umrüstung der Fertigungseinrichtung 1 oder den Austausch der Biegewerkzeuge 36, 37 einfacher vornehmen zu können.

Die Werkzeugaufnahmen 35 in den Pressenbalken 15, 16 sind einerseits zur lösbaren Befestigung der Biegewerkzeuge 36,37 ausgebildet, andererseits bilden sie Stützflächen 43 zur Übertragung der Biegekräfte - gemäß Pfeil 44 - aus.

Wie insbesondere der Fig. 2 zu entnehmen besteht die Handhabungsvorrichtung 4 im wesentlichen aus über Schwenkvorrichtungen 46, 47 zu einer Schwenkarmanordnung 48 schwenkbar verbundenen Gelenkarmen 49, 50, 51, wovon ein Gelenkarm 49 in einem Endbereich 52 auf einem auf Seiten- und Höhenführungsbahnen 53 parallel zur Arbeitsebene 14 linear verfahrbaren Fahrwerk 54 um eine Schwenkvorrichtung 55 schwenkbar gelagert ist, wobei eine Schwenkachse 56 parallel zur Biegeebene 14 verläuft. Eine zweite und dritte Schwenkachse 57, 58, der die Gelenkarme 49, 50, 51 lagernden Schwenkvorrichtungen 46, 47 verlaufen parallel zur Schwenkachse 56. In einem weiteren Endbereich 59 der Schwenkarmanordnung 48, ist eine Dreheinrichtung 60 mit einer Greifeinrichtung 61 angeordnet, wobei die Dreheinrichtung 60 eine Drehachse 62 ausbildet, die senkrecht zu den Schwenkachsen 56, 57, 58 verläuft. Weiters ist am Gelenkarm 51 eine Erfassungseinrichtung 63 für die Identifizierung und Lageerkennung der auf einer Ablage bzw. Zuführeinrichtung bereitgelegten bzw. zugeführten Platinen 3 befestigt.

Des weiteren weist die Fertigungseinrichtung 1 eine am Maschinengestell 5 oder am feststehenden Pressenbalken 15 angeordnete Auflagevorrichtung 64 für die Platinen 3 auf, die von der Greifeinrichtung 61 der Auflagevorrichtung 64 entnommen werden bzw. in dieser für einen Umgreifvorgang abgelegt und entnommen werden.

Weiters ist in Zuführrichtung - gemäß Pfeil 65 - der Platinen 3 hinter der Arbeitsebene 14 eine Positioniereinrichtung 66 für die Platine 3 bzw. Werkteil angeordnet die mit einer Steuer-und Überwachungseinrichtung 67 bzw. einem Positionierregelglied 68 der Steuer- und Überwachungseinrichtung 67 leitungsverbunden ist und am Maschinengestell 5 in einer zur Biegeebene 14 parallelen Ebene und zu dieser senkrechten Richtung in einer Verstelleinrichtung 69 verstellbar gelagert ist. Eine Antriebsanordnung der Verstelleinrichtung 69 ist als Positionierantrieb ausgelegt womit die Positioniereinrichtung 66 über Positionsvorgaben der Steuer- und Überwachungseinrichtung 67 gemäß dem Fertigungsprogramm zur Erfassung und Positionierung der Platine 3 bzw. des Werkteils für den Biegevorgang in die vorgegebene Stellung bringbar ist.

Weiters ist in der Fig. 2 die Erfassungseinrichtung 63 zu entnehmen die in einer zur Greifeinrichtung 61 definierten Position im Endbereich 59 der Schwenkarmanordnung 48 bzw. am Gelenkarm 51 angeordnet ist. Bevorzugt ist die Erfassungseinrichtung 63 auf einer der Dreheinrichtung 60 für die Greifeinrichtung 61 entgegensetzt angeordneten Stirnfläche 71 des Gelenkarms 51 befestigt. Eine Wirkrichtung gemäß - Pfeil 72 - zum Aufnehmen von Information über die Platine, wie Umriss, Lage etc., ist damit in exakt entgegengesetzter Richtung zu einer Aktionsrichtung der Greifeinrichtung 61.

Die Erfassungsvorrichtung 63 weist als Bilderfassungsmittel bevorzugt eine Groberkennungskamera 73 und eine Feinerkennungskamera 74 auf, sowie weiters einen Diodenlaser 75 und eine Beleuchtungseinrichtung 76, zur Aussendung von Lichtblitzen im Infrarot- Frequenzbereich mittels LED-Leuchteneinheiten 77.

Die Groberkennungskamera 73 wirkt bevorzugt in einem Abstandsbereich zwischen der Platine 3 und der Groberkennungskamera 73 von etwa 500 mm bis 2.000 mm. Die Feinerkennungskamera 74 wirkt in einem Abstand von etwa 300 mm. Die für die Positionierung der Erfassungseinrichtung 63, auf den jeweiligen für die Grob- und Feinerkennung vorgesehenen Abstand, erforderlichen Daten, werden mittels Triangulationsberechnung aus ermittelten Winkeldaten eines auf die Platine 3 mit dem Diodenlaser 75 projizierten Laserkreuzes ermittelt. Die Groberkennungskamera 73 und Feinerkennungskamera 74 sind mit entsprechend dem Wirkabstand unterschiedlichen Objektiven 78 ausgestattet. Die Groberkennung und Feinerkennung der Platine 3 erfolgt nach CAD-Daten aus der Planung bzw. Konstruktion, die in einem Rechner 79 der Steuer- und Überwachungseinrichtung 67 abgespeichert sind. Von diesen Daten werden Muster generiert. Das entsprechende Muster wird im aufgenommenen Bild gesucht und bei Übereinstimmung in der anschließenden Feinerkennung nach Verstellung der Schwenkarmanordnung 48 in eine Position für die Feinerkennung die Lage der Platine 3 bestimmt.

Um die Platine positionsgenau zu ergreifen, sind besondere Anforderungen an die Bildverarbeitung zu stellen. Wesentlich dabei ist die Beleuchtungseinrichtung 76 und das Auswerteverfahren. Grundsätzlich sind für die Beleuchtungseinrichtung 76 mehrere im gezeigten Ausführungsbeispiel drei der LED-Leuchteneinheiten 77 auf der Erfassungseinrichtung 63 angeordnet, die aufeinanderfolgend die Platine mit Lichtblitzen bei winkelig zueinander verlaufenden Strahlenfeldem beleuchten und je aktivierter LED- Leuchteneinheit 77 ein Bild mit der Feinerkennungskamera 74 von der Platine 3 bzw. einem Platinenausschnitt erfassen. Im Rechner 79 werden die im konkreten Ausführungsbeispiel erstellten drei Digitalbilder zu einen Summenbild generiert. Durch die winkelige Ausrichtung der Strahlenfelder zur Beleuchtung der Platine 3 und Erstellung des Digitalbildes, so wie der Bildung eines Summenbildes aus den Einzelbildern werden Reflexionen und Streulichteinflüsse weitestgehend ausgeschaltet, wobei weiters selbstverständlich Ausbildungen, wie z. B. Anwendung von Licht in einem engen Infrarot-Wellenbereich von etwa 820 bis 880 nm, Anordnung eines Bandpassfilters an der Feinerkennungskamera 74 aber auch weitere Maßnahmen zur exakten Lage Erfassung und Erstellung der Positionsdaten für das Ergreifen mit der Greifeinrichtung gesetzt werden können. Eine dieser weiteren Möglichkeiten zur Vermeidung störender Lichtreflektionen ist das emitierte Licht linear zu polarisieren. Das direkt reflektierte Licht behält seine Polarisationsrichtung bei und wird mit Hilfe eines 90° gedrehten Analysators am Objektiv 78 der Feinerkennungskamera 74 herausgefiltert, wobei diffuses Licht ungehindert passieren kann.

Die Positionsbestimmung mittels der Feinerkennung der Platine 3 ermöglicht nunmehr eine exakte Aufnahme bzw. exaktes Aufsetzen der Greifeinrichtung 61 auf die Platine 3, wie es für die Positionierung der Platine 3 in der Biegepresse 2 zur Durchführung einer Biegeoperation erforderlich ist. Zusätzlich kann mit der Erfassungseinrichtung 63 eine Kalibrierung eines Abstandes zwischen der Erfassungseinrichtung 63 und der Biegepresse 2 vorgenommen werden. Diese Kalibrierung wird mittels einer an der Biegepresse 2 angeordneten Kalibrierplatte 83 erreicht, welche beispielsweise mit Markierpunkten 84 mit definierter Größe und definierten Abstand zueinander versehen ist. Durch Vergleich des je Abstand unterschiedlichen Größen - und Abstandsverhältnis der Markierpunkte mit den vordefinierten und im Rechner 79 hinterlegten Werten, sowie anhand der Position der einzelnen Markierpunkte 84 wird eine Referenzposition in X- und Y-Richtung festgestellt und die erforderliche Verstellung der Handhabungsvorrichtung 4 gesteuert um die Platine 3 in Bearbeitungsposition zu bringen.

Weiters ist nach einer bevorzugten Ausführung vorgesehen, die Erfassungseinrichtung 63, insbesondere die Kamera 74, für die Feinerkennung der Platine 3 für eine Werkzeugerkennung bzw. Überprüfung der Daten des jeweils in der Biegepresse 2 eingesetzten Werkzeugsatzes heranzuziehen. Dazu weisen die Biegewerkzeuge 36, 37 Codierungen auf, die mit in der Steuer- und Überwachungseinrichtung 67 hinterlegten Codes verglichen werden.

Erwähnt wird noch, dass auch das Ablegen der Platinen 2 nach einem erfolgten Biegeprozess zur Bereitstellung von Folgeoperationen bzw. zum Abtransport der fertigen Werkstücke mittels der Erfassungseinrichtung 63 auf bereitgestellte Paletten vorgenommen wird, wie auch ein erforderliches Umgreifen der Greifeinrichtung 61 durch Ablage der Platine 3 auf der Auflagevorrichtung 64 und neuerliche Positionierung im Bezug auf die neue Greifposition der Greifvorrichtung, wie zuvor zur Positionierung insgesamt beschrieben vorgenommen wird.

In dem in Fig. 2 dargestellten Ausführungsbeispiel wird die Greifeinrichtung 61 durch eine Vakuumgreifeinrichtung 85 gebildet. Diese besteht aus einer mit Saugnäpfen 86 bestückten, mit dem erforderlichen Versorgungskanälen ausgestatteten Greiferplatte 87, die über einen Drehübertrager 88 für endlose Drehbewegung mit der Dreheinrichtung 60 des Gelenkarms 51 rotatorisch gekuppelt ist. Der Drehübertrager 88 ist mit Übertragungselementen 89 für eine Energieübertragung und/oder Steuer- und Überwachungssignalübertragung und einem Druckmedium wie z.B. Druckluft bzw. zum Anlegen eines Vakuums für die Vakuumgreifeinrichtung 85 ausgelegt. Durch die Zwischenschaltung des Drehübertragers 88 ist sowohl eine Versorgung der Vakuumgreifeinrichtung 85 mit der erforderlichen Druckluft oder auch mit Unterdruck möglich, wie auch eine etwaige Sensorik vorgesehen sein kann, um eine unterbrechungsfreie Übertragung von Steuer- und/oder Überwachungssignalen zur Steuer- und Überwachungseinrichtung 67 der Fertigungseinrichtung 1 zu gewährleisten. Bevorzugt ist der Drehübertrager 89 busfähig, bevorzugt wird ein AS-i-Bussystem zur Anwendung kommen. Für die elektrische Energieübertragung ist eine mehrpolige zumindest jedoch zweipolige Ausführung vorgesehen.

Die Greifeinrichtung 61, wie im gezeigten Ausführungsbeispiel, die durch eine Vakuumgreifeinrichtung 85 gebildet ist, kann selbstverständlich auch in anderen Ausführungsvarianten zum Einsatz kommen. Selbstverständlich ist es möglich, die Greifeinrichtung 61 auch als Zangengreifer, Magnetgreifer etc. für die erfindungsgemäße Fertigungseinrichtung 1 auszubilden.

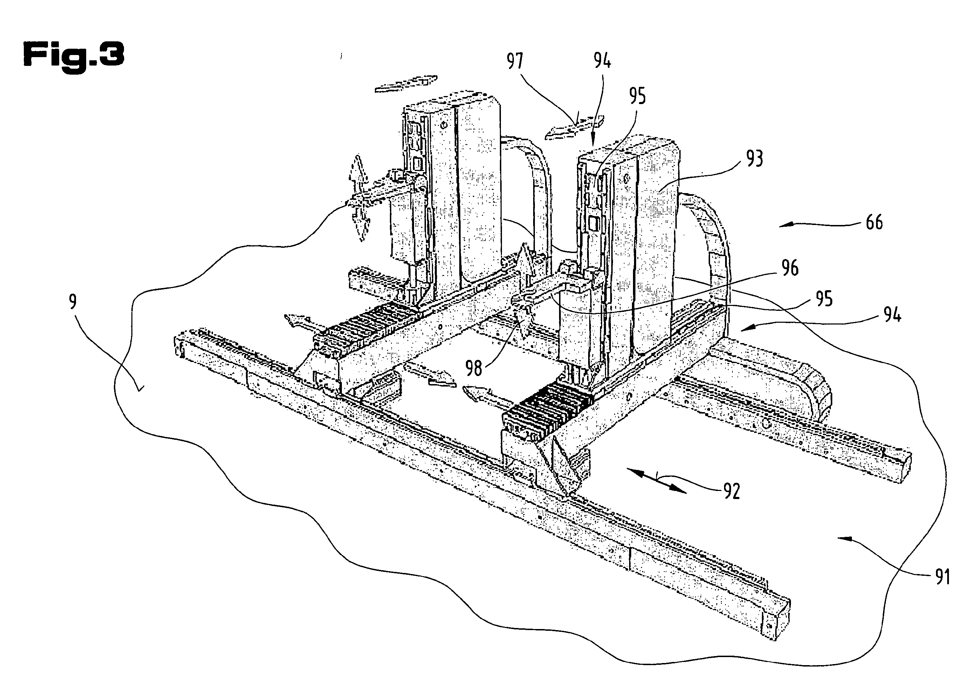

In der Fig. 3 ist eine mögliche Ausführung der Positioniereinrichtung 66 für das Positionieren der Platine 3 zur Durchführung eines Biegevorganges gezeigt. Diese wird durch eine Anschlagvorrichtung 90 gebildet mit zumindest zwei voneinander unabhängigen in Richtung der Längserstreckung der Biegewerkzeuge auf einer Führungsanordnung 91 - gemäß Doppelpfeil 92 - verfahrbaren Stelleinheiten 93. Jede Stelleinheit 93 ist weiters mit einer Schlittenanordnung 94 und einer Vorschubvorrichtungen 95 ausgestattet, womit ein in Richtung der Biegeebene 14 ausragender Anschlagfinger 96 senkrecht zur Biegeebene 14 gemäß einem Doppelpfeil 97 und in zur Aufstandsfläche 9 senkrecht verlaufender Richtung - gemäß Doppelpfeil 98 - verstellbar ist. Damit ist eine dreiachsige Bewegung des Anschlagfingers 96 erreicht.

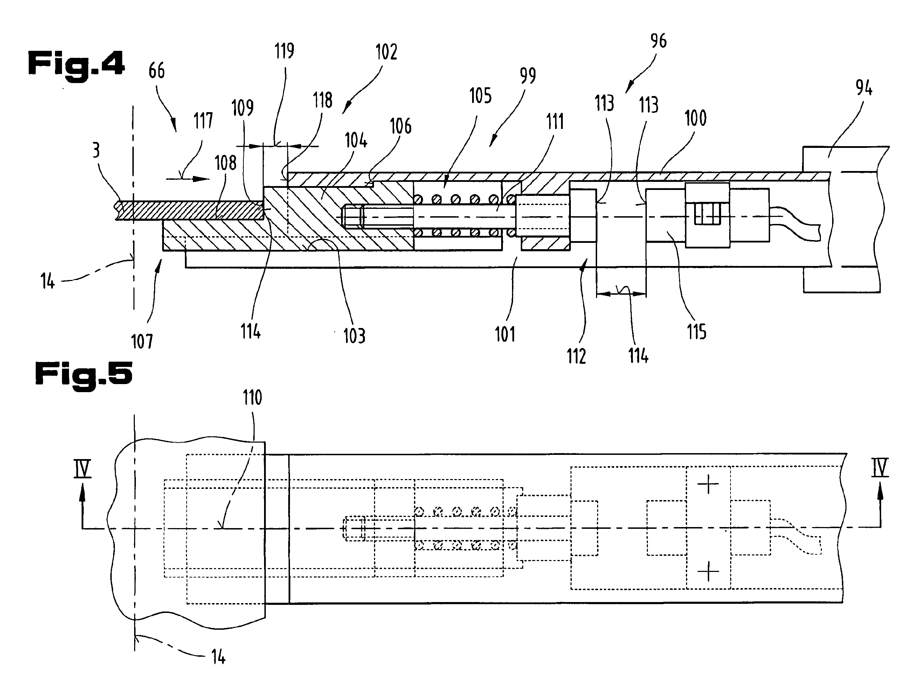

In den Fig. 4 und 5 ist nun im Detail der Anschlagfinger 96 der Positioniereinrichtung 66 gezeigt. In der Schlittenanordnung 94 ist ein Fingerträger 99 befestigt, der in Richtung der Biegeebene 14 auskragt. Der Fingerträger 99 ist im wesentlichen durch ein U-förmiges Profil mit einem Basisschenkel 100 und Seitenschenkeln 101 gebildet. In einem der Biegeebene 14 zugewandten Endbereich 102 ist in einer durch Führungsnuten 103 gebildeten Längsführung ein den Fingerträger 99 überragender Fingereinsatz 104 gegen die Wirkung einer Federanordnung 105, z.B. einer Spiraldruckfeder, in zur Biegeebene 14 senkrechter Richtung verstellbar gelagert dessen ausgefahrene Endstellung durch eine Anschlaganordnung 106 begrenzt ist. Der Fingereinsatz 104 weist an einem den Fingerträger 99 überragenden Ende 107 eine treppenförmige Ausnehmung 108 auf, durch die eine zur Biegeebene 14 parallel verlaufende Anschlagfläche 109 für die Platine 3 ausgebildet wird. Weiters ist im Fingereinsatz 104 in zur Anschlagfläche 109 entgegengesetzten Richtung ein etwa im Bereich einer Längsmittelachse 110 sich erstreckender Taststift 111 bewegungsfest angeordnet, der von der Spiraldruckfeder der Federanordnung 105 umfasst ist. Dem Taststift 111 bzw. einer in einem Endbereich 112 gebildeten Stirnfläche 113 ist in einem Abstand 114 im Fingerträger 99 ein Kontaktschalter ev. ein Näherungssensor oder Abstands-Messsensor 115 zugeordnet, der beispielsweise über eine Leitung 116 mit der Steuer- und/oder Überwachungseinrichtung 67 leitungsverbunden ist. Selbstverständlich ist auch eine drahtlose Signalübertragung mit entsprechenden Sende- und Empfangseinrichtungen vom Abstands-Messsensor 115 zur Steuer-und Überwachungseinrichtung 67 möglich.

Wie weiters zu entnehmen, bildet der Fingereinsatz 104 mit der Anschlagfläche 109 einen variablen Anschlag der in eine Fixposition verstellbar ist die nach den Fertigungsdaten für den Werkteil eingestellt ist.

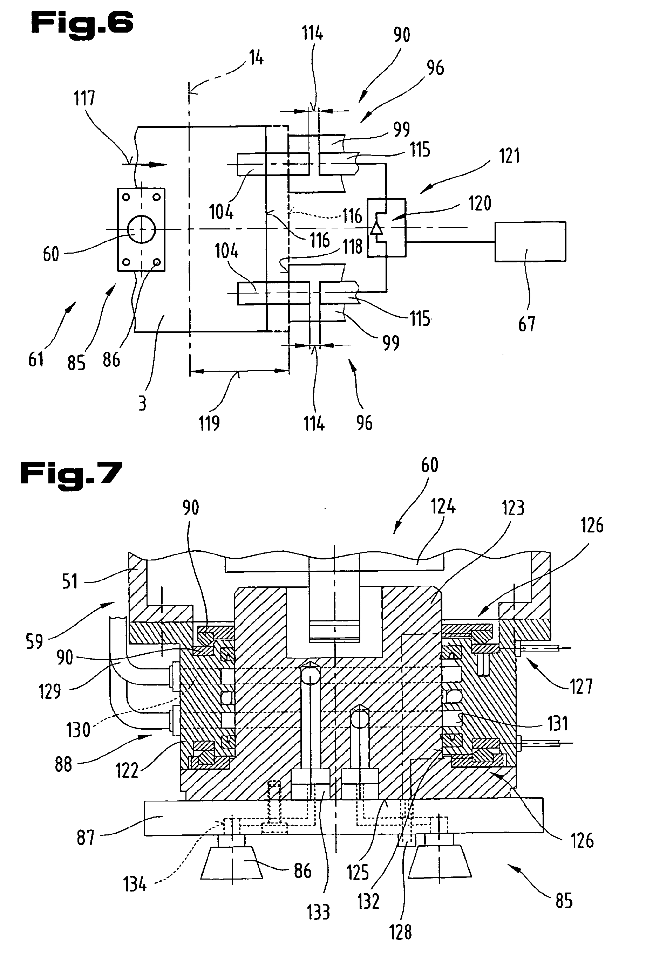

In der Fig. 6 ist schematisch ein Positioniervorgang dargestellt. In Verbindung mit der Ermittlung einer etwaigen Abstandsdifferenz an zumindest zwei voneinander beabstandeter Anschlagfinger 96 der Anschlaganordnung 106 wird eine Lagekorrektur der Platine 3 mit der Dreheinrichtung 60 in einem ersten Positionierschritt vorgenommen bei dem die Platine 3 im bezug auf die Biegeebene 14 z.B. mit einer Stirnfläche 116 in eine vorgegebene Lage, die parallel jedoch auch winkelig verlaufen kann, durch entsprechende Durchführung einer Drehbewegung der Vakuumgreifeinrichtung 65 mit der Dreheinheit 60, gebracht. Nach dieser Voreinstellung der Stirnfläche 116 im Bezug auf die Biegeebene 14 wird die Platine 3 mit der Greifeinrichtung 61 gemäß einem Pfeil bei Einfederung des Fingereinsatzes 104 gegen eine - wie beispielhaft dargestellt - parallel zur Biegeebene 14 ausgerichtete Anschlagebene 18 verstellt und damit eine exakte und für den Biegevorgang vorgesehene Biegedistanz 119 zwischen der Stirnkante 114 und der Biegeebene 14 erreicht. Durch das Andrücken der Stimkante 114 an die durch den Fingerträger 99 ausgebildeten Anschlagebene 118 können weiters bestehende Ungenauigkeiten, die nach dem Verdrehvorgang mit der Dreheinrichtung 60 noch bestehen, durch die Elastizität der Saugnäpfe 86 ausgeglichen werden, ohne dass weitere gesteuerte Verstellvorgänge erforderlich werden, wodurch es zu einer Reduzierung der Taktzeit im Fertigungsablauf kommt. Zur Ermittlung der unterschiedlichen, an den Anschlagfingern 96 mittels der Abstands-Messsensoren 115 festgestellten Verstellwege dient eine Vergleicherschaltung 120 einer Wegemesseinrichtung 121, die mit den Abstands-Messsensoren 115 und der Steuer- und Überwachungseinrichtung 67 über Leitungen verbunden ist oder die wie bereits vorhergehend ausgeführt, für drahtlose Signalübertragung konzipiert ist.

Die Lagekorrektur der Platine 3 mit ihrer Stirnfläche 116 in bezug auf die Biegeebene 14 wird üblich und in einer vereinfachter Ausführung durch einen Kontaktschalter 115 in der Anschlagsanordnung 106 gebildet sind. Bei einer winkeligen Annäherung der Stirnkante 116 an die Fingereinsätze 104 wird vorerst einer der zueinander beabstandeten Kontaktschalter ansprechen. Entsprechend einem abgegebenen Signal dieses Kontaktschalters wird eine Drehbewegung der Dreheinheit 60 in Richtung des weiteren Kontaktschalters 115 bewirkt und damit die Platine 3 zum Ausgleich der winkeligen Lage solange gedreht wird, bis dieser weitere Kontaktschalter ebenfalls anspricht womit die Vorpositionierung der Platine 3 bzw. deren Stirnkante 116 vollzogen ist. Bei einer derartigen Ausführung ist der steuerungstechnische Aufwand, der bei der Anwendung von Messsensoren mit der erforderlichen Vergleicherschaltung 120 umfangreicher ist, vereinfacht und bei einem gleichen technischen Effekt mit geringerem Kostenaufwand realisiert..

In der Figur 7 ist weiters im Detail der Drehübertrager 88 für Übertragung von Steuersignalen und/oder Energie und Versorgung der Vakuumgreifeinrichtung 85 bei unbegrenzter Drehbewegung der Greifeinrichtung 61 gezeigt. Gebildet wird dieser durch ein rohrförmiges Mantelgehäuse 122 das am Gelenkarm 51 über eine flanschförmige Ausbildung befestigt ist. In diesem ist ein Dreheinsatz 123 über eine weiters nicht im Detail dargestellte Lageranordnung drehbar gelagert und mit einem Drehantrieb 124 drehfest gekuppelt. Auf einer vom Drehantrieb 124 entgegengesetzter Stirnfläche 125 des Dreheinsatzes 123 ist die mit den Saugnäpfen 86 bestückte Greiferplatte 87 befestigt.

Um nun zumindest zweipolig Energie aber auch Signale zu übertragen sind zumindest zwei Schleifringanordnungen 126 vorgesehen, die ringförmig im Mantelgehäuse 122 und dem Dreheinsatz 123 umfassend angeordnet sind und eine permanente Leitungsverbindung zwischen feststehenden Anschlussmitteln 127 am Mantelgehäuse 122 und Anschlussmitteln 128 z.B. auf der drehbewegten Greiferplatte 87 ausbilden.

Zur Beaufschlagung der Saugnäpfe 86 mit dem erforderlichen Vakuum sind ortsfeste Versorgungsleitungen 129 am Mantelgehäuse 122 für Druckluft angeschlossen die über in radialer Richtung verlaufende Bohrungen 130 und umlaufenden Nuten 131 in einer den Dreheinsatz 123 aufnehmenden Bohrung 132 des Mantelgehäuses 122 leitungsverbunden sind. Den Nuten 131 zugeordnet sind im Dreheinsatz 123 weiters Anschlussbohrungen 133 zur Herstellung einer Strömungsverbindung mit Anschlussmitteln 128 der Greiferplatte 87, die mit weiteren Versorgungsbohrungen 134 für die Beaufschlagung der Saugnäpfe 86 versehen ist, vorgesehen. Erwähnt sei noch, dass zur dichten Abschottung zwischen den Nuten 131 wie auch zwischen den Nuten 131 und der äußeren Umgebung den Dreheinsatz 123 umgebende Dichtungsringe 135 im Mantelgehäuse 122 angeordnet sind. Diese bestehen aus einem einen geringen Reibungsfaktor aufweisendem Material. Weiters ist selbstverständlich, dass die Schleifringanordnungen 126 gegenüber dem Mantelgehäuse 122 und dem Dreheinsatz 123 entsprechend isoliert angeordnet sind.

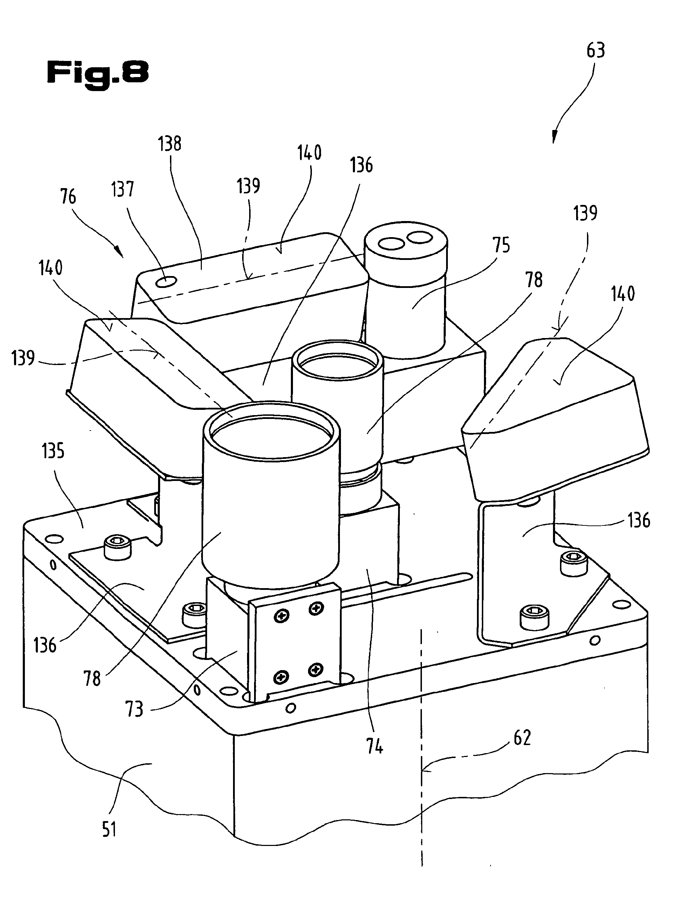

In der Fig. 8 ist nun im Detail die auf dem Gelenkarm 51 angeordnete Erfassungseinrichtung 63 ohne einer Schutzverkleidung gezeigt. Auf einer mit dem Gelenkarm 51 bewegungsfest verbundenen Trägerplatte 135 sind über Montagewinkel 136 die Beleuchtungseinrichtung 76 bildende mit LED's 137 bestückte Beleuchtungsköpfe 138 befestigt. Strahlenfelder definierende Längsachsen 139 bilden zwischen zwei der insgesamt drei Beleuchtungsköpfe 138 zueinander einen rechten Winkel und bilden mit der Längsachse 139 des dritten Beleuchtungskopfes 138 jeweils einen Winkel von etwa 45° aus. Eine Lichtaustrittsfläche 140 der Beleuchtungsköpfe 138 ist jeweils gegenüber einer rechtwinkelig auf eine Längsachse des Gelenkarms 51 senkrecht verlaufenden Ebene in einem Winkelbereich von etwa 15° bis 45° derart geneigt, dass die Strahlenfelder bei zunehmender Entfernung von der Erfassungseinrichtung 63 konisch aufeinander zulaufend ausgerichtet sind.

Weiters weist die Erfassungseinrichtung 63, wie bereits vorhergehend beschrieben die Groberkennungskamera 73 mit dem Objektiv 78, bevorzugt mit einer Brennweite von 6 mm, sowie die Feinerkennungskamera 74 mit dem Objektiv 78, bevorzugt mit einer Brennweite von 16 mm, auf.

Des weiteren ist auf der Trägerplatte 135 der Diodenlaser 75 für die Projektion eines Laserkreuzes auf der Oberfläche der Platine 3 angeordnet. welches zur Abstandsermittlung zwischen der Erfassungseinrichtung 63 und der aufzunehmenden Platine 3, wie ebenfalls vorhergehend beschrieben, herangezogen wird.

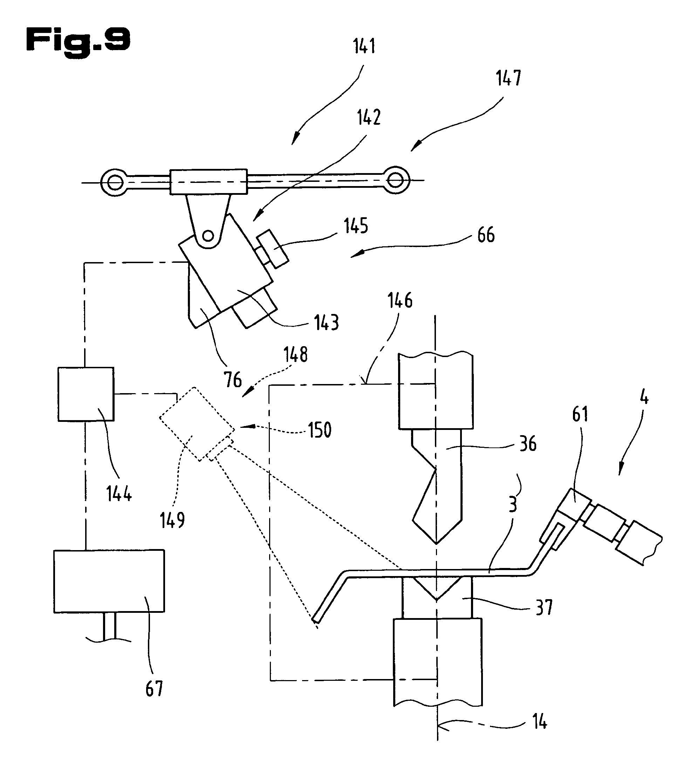

In der Fig. 9 ist nun eine weitere Ausführung der Positioniervorrichtung 66 für ein berührungsloses Positionieren der Platine 3 mit der Handhabungsvorrichtung 4 zwischen den Biegewerkzeugen 36, 37 in einer möglichen Ausbildung als optisch-elektronische Messvorrichtung 141 gezeigt, sowie an Hand dieser Fig. ein Verfahren zum Positionieren der Platine 3 beschrieben. Im wesentlichen wird die optisch-elektronische Messvorrichtung 141 durch zumindest ein Bilderfassungsmittel 142, z.B. eine CCD-Kamera 143 und einem Rechner 144, der mit dem Bilderfassungsmittel 142 und der Steuer- und Überwachungseinrichtung 67, der Biegepresse 2 leitungsverbunden ist, gebildet. Das Bilderfassungsmittel 142 ist beispielsweise kombiniert mit einem Laserscanner 145 und der Beleuchtungseinrichtung 76. Die so gebildete Einheit ist zur berührungslosen Erfassung einer IST- Position eines Konturbereiches der in einen in Bezug auf die Biegeebene 14 definierten Pressenraum 146 mit der Handhabungsvorrichtung 4 für eine Biegeoperation zwischen den Biegewerkzeugen 36, 37 eingeführten Platine 3 ausgelegt., und können wahlweise mehrere derartige Einheiten fix installiert sein. Im gezeigten Beispiel ist eine Einheit auf einer Zweikoordinaten-Linearschlittenanordnung 147 verfahrbar angeordnet. Möglich ist aber auch die Anwendung eines Mehrachs-Manipulators für den Einsatz der Einheit.

Eine verfahrbare Anordnung ermöglicht eine vereinfachte technische Ausrüstung für die optisch-elektronische Messvorrichtung 141, da entsprechend dem Fertigungsprogramm das Bilderfassungsmittel 142 in Position nahe der in den Pressenraum 146 eingeführten Platine 3 zur Ermittlung der Positionsdaten der Platine in Stellung gebracht werden kann.

Bei einer Festinstallation werden entsprechend der Größe des Pressenraumes 146 mehrere Bilderfassungsmittel 142 erforderlich sein.

Die Positionierung der Platine 3 zwischen den Biegewerkzeugen 36, 37 zur Vornahme einer Abkantung erfolgt durch Erfassung des für den Biegevorgang maßgebenden Konturbereiches der Platine 3 gemäß Vorgaben im Fertigungsprogramm zur Herstellung des Werkteils, die bevorzugt in einem Onlinebetrieb aus dem CAD-Bereich übernommen werden. Mittels der Positioniervorrichtung 66 wird das Einlegen der Platine 3 mit der Handhabungsvorrichtung 4 bis zur Übereinstimmung einer Ist-Lage des entsprechenden Umrissbereiches mit der in einem Speicher des Rechners 144, oder der Steuer- und Überwachungseinrichtung 67 hinterlegten Referenzdaten einer Soll-Lage des entsprechenden Konturbereiches durch Ansteuerung der Verstelleinrichtung 69 der Handhabungsvorrichtung 4 zur Vornahme der Bewegungsabläufe.

Weitere Möglichkeiten einer berührungslosen Positionierung der Platine 3 zwischen den Biegewerkzeugen 36, 37, welche über die Ermittlung von Raumkoordinaten mittels einer Koordinaten - Erfassungsvorrichtung 148 der Platine 3 erfolgt, bestehen in der Anwendung von aus dem Stand der Technik bekannten Triangulationssensoren 149 oder Lichtschnittsensoren 150 anstelle der vorhergehend beschriebenen Bilderfassungsmittel.

Beide Verfahren ermöglichen eine kontaktlose Messung bzw. Positionserfassung, wobei ein Strahl einer Laserdiode durch eine Linse auf das Werkstück fokussiert wird. Das unter einem bestimmten Winkel abgestrahlte Streulicht wird über eine Blende von einer Detektoreinrichtung z.B. einem CCD-Zeilenarray aufgenommen. Durch trigonometrische Berechnungen des Strahlen- und Streulichtverlaufes werden die jeweiligen Ist-Daten der Position z.B. eines Konturverlaufes der Platine 3 ermittelt und durch Ansteuerung der Handhabungseinrichtung 4 und/oder der Greifeinrichtung 61 in Übereinstimmung mit den hinterlegten Soll-Daten gebracht.

Das Lichtschnittverfahren unter Anwendung des Lichtschnittsensors 150 verwendet ebenfalls zur berührungslosen Datenerfassung ein von einer Laserdiode über eine Fokuslinse auf die Platine 3 projizierten linear aufgeweiteten Laserstrahl. Das Streulicht wird über eine Abbildungslinse auf eine CCD-Matrix projiziert, wobei an Stelle des Zeilenarrays ein Flächenarray verwendet wird. Dieses Verfahren eignet sich neben der Ermittlung der Raumkoordinaten eines Konturbereiches auch für eine Kontrolle von Biegewinkel vorhergehender Biegeoperationen.

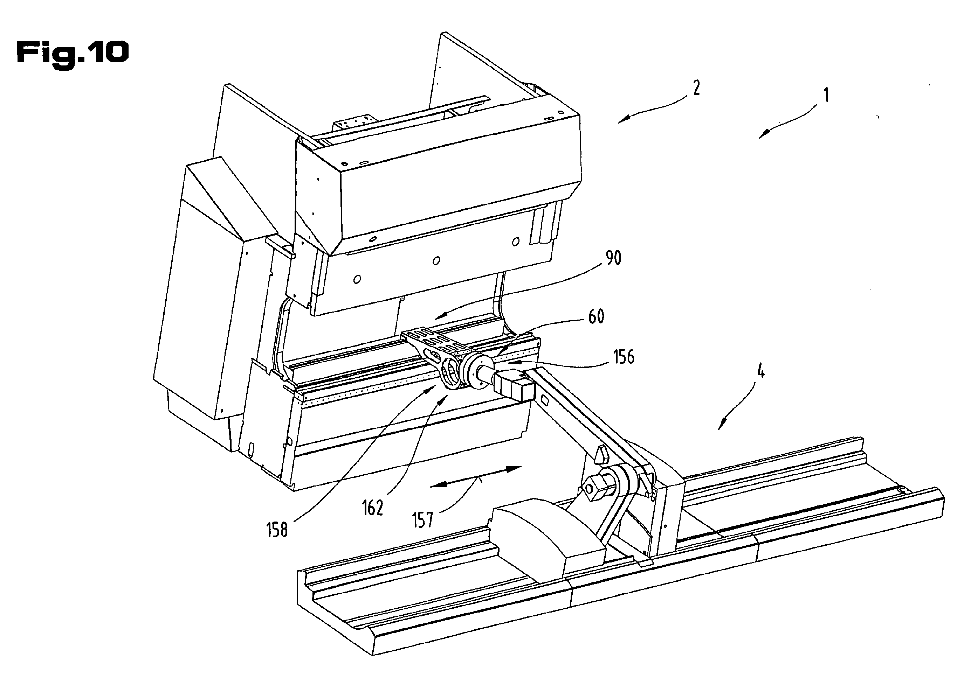

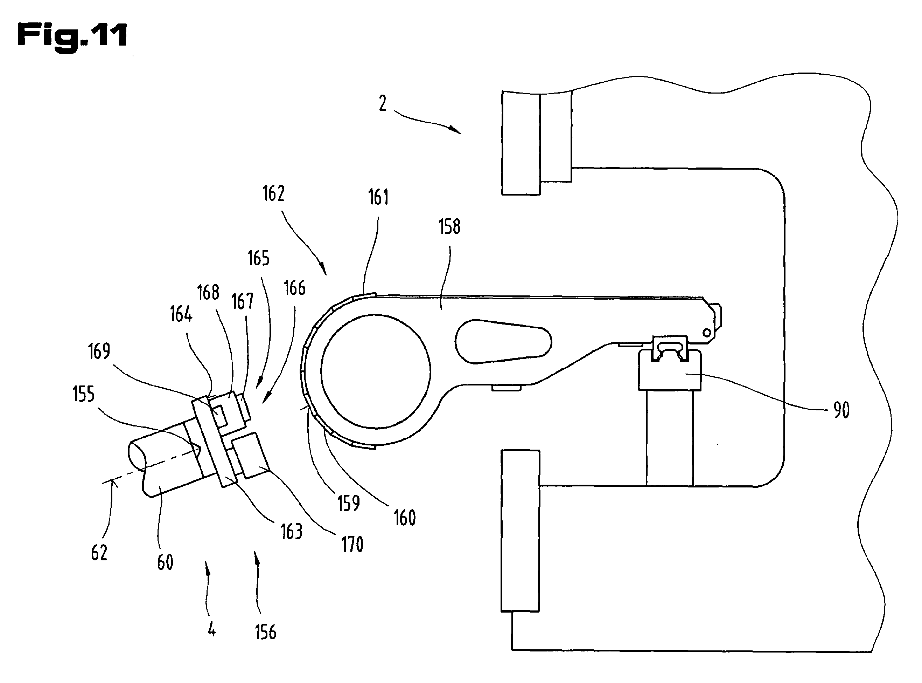

Anhand der nunmehr in den Fig. 10 und 11 beschriebenen Anlagenanordnung der aus der Biegepresse 2 und der Handhabungsvorrichtung 4 gebildeten Fertigungseinrichtung 1 werden erfindungsgemäße Komponenten zur Kalibrierung der Handhabungsvorrichtung 4 und weiters das Verfahren zur Kalibrierung erläutert. Um eine Offline-Programmierung durchführen zu können, ist zusätzlich zur Grundkalibrierung der Handhabungsvorrichtung 4 eine Kompensation von lastbedingten Positionsabweichungen wie sie im Realbetrieb auftreten erforderlich.

Die Handhabung von Werkstücken beim Biegen auf einer Abkantpresse stellt besondere Anforderungen an die Genauigkeit der Handhabungsvorrichtung 4, um die Werkteile, z.B. die Platine 3, von der Aufnahme aus der Bereitstellung über die Positionierung der Platine 3 im Arbeitsraum der Biegepresse 2 sowie das Führen der Platine 3 beim Biegevorgang und weiters dem orientierten Ablegen des bearbeiteten Biegeteils zu handhaben. Insbesondere die Absolutgenauigkeit bei Positionierung und Führung des Biegeteils wirken sich direkt auf die Fertigungsgenauigkeit aus. Um nun für all diese Vorgänge eines Fertigungsablaufes die entsprechende Absolutgenauigkeit bei der Positionierung des Werkteils im Arbeitsraum ist eine vorgelagerte Kalibrierung von Handhabungsvorrichtung 4 und Biegepresse 2 vorteilhaft vorzusehen wozu erfindungsgemäß die Handhabungsvorrichtung 4 an einem die Greifeinrichtung 61 üblich positionierenden Positioniermittel 155 ein Messsystem 156 bestückt wird. In der Biegepresse 2 wird bevorzugt in der Anschlagvorrichtung 90, in vorgegebener Position der Z-Achse - gemäß Doppelpfeil 157 - ein mit mit hoher Maßgenauigkeit gefertigter Referenzkörper 158 gespannt, der der Handhabungsvorrichtung 4 zugewandt mit einer Vielzahl von Referenzmittel 159 versehen ist, die im bezug auf die eingenommene Position der Anschlagvorrichtung 90 exakt vorgegebene und festgelegte Raumlagen und Raumkoordinaten aufweisen. Die Referenzmittel 159 werden bevorzugt durch Bohrungen 160 in einer Mehrzahl von Trägerblechen 161 gebildet, die in Art einer Trommel längs eines Umfangs winkelig aneinander gereiht, mit dem Messsystem zugewandten Oberflächen und den in diesen vorgesehenen Referenzmittel 159 einen Messbereich 162 für den Kalibriervorgang ausbilden.

Das Messsystem 156 besteht aus einer Trägerplatte 163, welche bewegungsfest auf der Dreheinrichtung 60 der Handhabungsvorrichtung 4 montiert ist. Auf einer dem Referenzkörper 158 zugewandten Planfläche 164 ist auf der Trägerplatte 163 exzentrisch zu der Drehachse 62 der Dreheinrichtung 60 z.B. eine Kamera 165, insbesondere eine CCD-Kamera 166, deren Objektiv 167 von einer Ringleuchte 168 umgeben ist, angeordnet. Weiters ist auf der Trägerplatte 163 zur Ermittlung des exakten Abstandes im bezug auf den Referenzkörper 158 ein Laser-Abstandsmesser 169 vorgesehen.

Weiters ist der Fig. 11 zu entnehmen, dass auf der Trägerplatte 163 zur Simulation eines Echt-Betriebes, bei dem die Handhabungsvorrichtung 4 mit einer Platine 3 belastet ist, zur Ermittlung der durch das Werkteilgewicht und der damit verbundenen elastischen Verformung der Handhabungsvorrichtung 4 bedingten Auswirkungen auf den Positioniervorgang die Anordnung eines Referenzgewichtes 170 vorgesehen. In zumindest zwei Simulationsverfahren mit unterschiedlichen Referenzgewichten 170 werden die Referenzmittel 159 der Reihe nach angefahren und aus dem Soll/Ist-Vergleich der Positionierung in einer Kompensationsmatrix in der Steuereinrichtung bzw. Speicher eines Rechners die belastungsbedingten Kompensationswerte abgespeichert. Im Echtbetrieb werden gemäß dem tatsächlichen und bekannten Gewicht des zu bearbeitenden Werkteils daraus die tatsächlichen Kompensationswerte durch Interpolation ermittelt und korrigierte Roboterposen erstellt, wodurch eine gleich bleibend genaue Positionierung der Platinen 3 bzw. des Werkteile im Arbeitsraum der Biegepresse 2 sichergestellt wird.

Nachfolgend wird noch generell der Vorgang der Kalibrierung unter Berücksichtigung der Belastung der Handhabungsvorrichtung 4, insbesondere Roboters, gegliedert nach den Vorgängen
1. Modellierung des Roboters
2. Generierung eines Verfahrprogramms
3. Messen der Positionierabweichungen des Roboters
4. Parameteridentifikation des Robotermodells
5. Korrektur des Verfahrprogramms
näher erläutert.

### 1. Modellierung des Roboters

Diese erfolgt im einfachsten Fall mit Hilfe einer Kalibriersoftware, die prinzipiell in der Lage ist, die zu kompensierenden Einflüsse bzw. deren Auswirkungen auf die Bestandteile des Roboters zu berücksichtigen. Einflüsse sind in diesem Fall Montage und Fertigungstoleranzen des Roboters sowie der gesamten Anordnung, mit Auswirkung auf:
- Koordinatentransformationen zwischen den Komponenten der Anordnung (Roboter, Maschine und Referenzkörper),
- die kinematische Kette und das Übertragungsverhalten der Antriebe des Roboters, sowie
- Lasteinwirkungen durch die Einzelmassen der Elemente der kinematischen Kette des Roboters und am Handgelenk des Roboters angeflanschter Nutz- oder Zusatzlasten mit Auswirkungen auf die Positioniergenauigkeit des Roboters aufgrund nicht oder unzureichend bekannter Elastizitäten der Antriebe und Elemente der kinematischen Kette des Roboters.

Die Erstellung des mathematischen Modells kann auch unabhängig von einer vorgegebenen Software erfolgen.

Mit dem mathematischen Modell muss es möglich sein, das Positionierverhalten des Roboters, in Abhängigkeit von den zu kompensierenden Einflüssen bzw. deren Auswirkungen auf die Bestandteile des Roboters, im Arbeitsraum darzustellen.

### (Anmerkung: Dieser Schritt ist zu 100% Bestandteil der normalen Vorgehensweise zur Kalibrierung einer kinematischen Kette)

### 2. Generierung eines Verfahrprogramms zur Messung der Positionierfehler aufgrund von Einflüssen durch Last sowie Montage- und Fertigungstoleranzen

Hierzu werden die Positions- und Orientierungsdaten im Raum-, Maschinen- oder Roboterbasiskoordinatensystem bekannter Punkte (bekannt durch Vermessung oder Sicherstellung ausreichend hoher Fertigungsgenauigkeit) beispielsweise auf einem Referenzkörper 161 zu einem Roboterverfahrprogramm so verarbeitet, dass mit Hilfe des Verfahrprogramms mit einem am Roboter adaptierten Messsystem 159 die Positionierfehler des Roboters aufgrund der oben genannten Einflüsse an den Punkten gemessen werden können. Die Punkte müssen hierzu in Form geeigneter Messmerkmale, z.B. Bohrungen 163 als Referenzmittel 162, ausgestaltet sein.

Alternativ kann auch ein am Roboterflansch angebrachtes Messmerkmal mit einem externen Messsystem (z.B. Lasertracker, Theodolit, etc.) verwendet werden. Diese Anordnung ermöglicht außerdem die Verwendung beliebiger Punkte im Arbeitsraum.

(Anmerkung: Dieser Schritt ist, soweit es die Verwendung beliebiger Punkte im Raum in Verbindung mit einem externen Messsystem betrifft, Bestandteil der normalen Vorgehensweise zur Kalibrierung einer kinematischen Kette. Die Generierung eines Verfahrprogramms an einem Referenzkörper wird in identischer Form im Rahmen einer Temperaturdriftkompensation eingesetzt.)

### 3. Messen der Positionierabweichungen des Roboters anhand des Verfahrprogramms

In diesem Schritt werden die Positionierfehler der kinematischen Kette an den Messpunkten mit Hilfe eines Messsystems und dem in 2. generierten Verfahrprogramm gemessen. Die Ausgabe der Messdaten erfolgt (ggf. auch durch Umrechnung) in einem raumfesten Koordinatensystem mit möglichst bekanntem Bezug zum Roboterbasiskoordinatensystem.

Im Gegensatz zur herkömmlichen Vorgehensweise zur Kalibrierung kinematischer Ketten wird dieser Vorgang zweimal, mit unterschiedlichen, am Handgelenk des Roboters angeflanschten Zusatzlasten, durchgeführt. Hierdurch erhält man unterschiedliche Messdaten in Abhängigkeit von der jeweiligen Zusatzlast.

### 4. Parameteridentifikation des Robotermodells (Parameteridentifikation: Ermittlung der tatsächlichen Werte der Parameter des Robotermodells)

Zunächst wird, wie bei einer herkömmlichen Kalibrierung des Roboters üblich, die Koordinatentransformation vom Koordinatensystem der verwendeten Messpunkte in das Roboterbasiskoordiantensystem ermittelt. Dies erfolgt anhand eines der Messdatensätze (Messdatensatz Nr. 1) aus Schritt 3. mit Hilfe beispielsweise eines Bestfit-Verfahrens oder einfach durch Ermittlung der mittleren Abweichungen in den einzelnen Koordinatenrichtungen.

Mit Hilfe der ermittelten Koordinatentransformation wird der Messdatensatz Nr. 1 in das Roboterbasiskoordinatensystem transformiert.

Anschließend werden mit Hilfe der Kalibriersoftware zunächst die Elastizitätsparameter und in einem zweiten Schritt die übrigen, zu identifizierenden Parameter der kinematischen Kette anhand des transformierten Messdatensatzes Nr. 1 identifiziert.

(Anmerkung: Bis hier entspricht die Parameteridentifikation im Prinzip der normalen, zur Kalibrierung kinematischer Ketten üblichen Vorgehensweise. Als Besonderheit kann lediglich die Vorab-Identifikation der Elastizitätsparameter gesehen werden. Die nachfolgende Schleife bildet den eigentlichen, neuen Kern des Verfahrens).

Anhand des identifizierten Robotermodells sowie der zuvor ermittelten Koordinatentransformation werden nun (mit der Kalibriersoftware) die unter folgenden Bedingungen zu erwartenden Positionierfehler im Sinne einer Simulation berechnet:
a) Die identifizierten Parameter werden von der Robotersteuerung nicht berücksichtigt, wirken sich aber auf das Positionierverhalten der betrachteten kinematischen Kette aus. Sie werden daher zur Berechnung der von der simulierten, kinematischen Kette tatsächlich angefahrenen Positionen verwendet.
b) Es wird das unter 2. generierte Verfahrprogramm in Verbindung mit den unter 3. zur Vermessung verwendeten Punkten zugrunde gelegt. Hierbei werden (quasi in Form einer mathematischen Simulation) die Messpunkte mit exakt denselben, durch die Positionsgeberwerte der Kinematik vorgegebenen Posen angefahren, wie bei der realen Messung.
c) Es wird das unter 3. zur Vermessung der Positionierfehler im zweiten Messdatensatz (Messdatensatz Nr. 2) verwendete Zusatzgewicht bei der Berechnung berücksichtigt. Dies entspricht einer Veränderung des Lastzustandes gegenüber den Identifikationsbedingungen, deren reale Auswirkung durch die unter 3. durchgeführte Messung (Messdatensatz Nr. 2) bekannt ist.

Diese berechneten Positionierfehler werden nun mit den unter 3. ermittelten, tatsächlichen Positionierfehlern aus dem Messdatensatz Nr. 2 verglichen. Es ist hierbei ausreichend, die Anteile der Differenz zwischen den Datensätzen (simulierte und gemessene Daten) in der Wirkrichtung der Schwerkraft auszuwerten.

Als Optimierungskriterium kann nun entweder die gemittelte Abweichung zwischen beiden Datensätzen oder die Summe der Fehlerquadrate dieser Abweichungen herangezogen werden.

Im Fall der gemittelten Abweichung muss diese möglichst nahe dem Wert Null sein, im Falle der Auswertung der Fehlerquadrate muss das Minimum der Summe der Fehlerquadrate gefunden werden.

Danach wird die eingangs anhand des Messdatensatzes Nr. 1 ermittelte Koordinatentransformation (vom Koordinatensystem der verwendeten Messpunkte in das Roboterbasiskoordiantensystem) verändert, indem (mindestens) der Anteil der Transformation in Wirkrichtung der Schwerkraft schrittweise systematisch im Sinne eines Näherungsverfahrens variiert wird.

Nach jeder Variation wird die jeweils veränderte Transformation erneut auf den untransformierten Messdatensatz Nr. 1 angewendet. Mit dem so transformierten Messdatensatz werden, wie oben bereits beschrieben, wiederum zunächst die Elastizitäten und anschließend die restlichen zu identifizierenden Parameter des Robotermodells identifiziert. Im Anschluss daran werden erneut die rechnerischen Positionierfehler mit dem neu identifizierten Modell für das unter 2. generierte Verfahrprogramm unter den oben genannten Bedingungen berechnet und mit den Abweichungen im Messdatensatz Nr. 2 verglichen.

Diese Schleife wird solange durchlaufen, bis eines der oben angeführten Optimierungskriterien erfüllt ist.

### Hintergrund dieser Vorgehensweise ist folgender:

Da die Messdatenaufnahme in der Regel nur in einem kleinen Bereich des Arbeitsraumes erfolgt, können durch Elastizitäten verursachte Positionierfehler oftmals kaum von den Auswirkungen anderer Einflüsse unterschieden werden. Der Roboter biegt sich im gesamten Messbereich ähnlich stark durch, so dass allein anhand der Messwerte eines Lastzustandes bei der Parameteridentifikation nicht zu erkennen ist, welcher Anteil der Abweichung Folge der Durchbiegung und welcher Anteil auf andere Parameter einschließlich der Koordinatentransformationen zurückzuführen ist. Der Roboter wird daher in der Regel steifer identifiziert, als er tatsächlich ist. Um dieses Defizit auszugleichen, wird das Ergebnis einer Parameteridentifikation anhand der Messdaten für einen anderen Lastzustand überprüft. Anschließend wird die Restabweichung aufgrund der Durchbiegung im Messdatensatz über die Veränderung der Koordinatentransformation erhöht und über die ausschließliche Identifikation der Elastizitäten im ersten Schritt zuverlässig den Elastizitätsparametern zugeordnet. Auf der Basis der identifizierten Elastizitäten können dann die übrigen Parameter identifiziert werden.

### 5. Korrektur des Verfahrprogramms

Die Korrektur des Verfahrprogramms erfolgt wieder wie bei der herkömmlichen Kalibrierung kinematischer Ketten üblich.

Der Ordnung halber sei abschließend darauf hingewiesen, dass zum besseren Verständnis des Aufbaus der Fertigungseinrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 11 gezeigten Ausführungen den Gegenstand von eigenständigen erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Fertigungseinrichtung
- 2: Biegepresse
- 3: Platine
- 4: Handhabungsvorrichtung
- 5: Maschinengestell

- 6: Ständer-Seitenwange
- 7: Ständer-Seitenwange
- 8: Dämpfungselement
- 9: Aufstandsfläche
- 10: Bodenplatte

- 11: Abstand
- 12: Mittelachse
- 13: Wandteil
- 14: Biegeebene
- 15: Pressenbalken

- 16: Pressenbalken
- 17: Länge
- 19: Befestigungsanordnung
- 20: Stirnfläche

- 21: Schenkel
- 22: Seitenfläche
- 23: Seitenfläche
- 24: Schenkel
- 25: Stellantrieb

- 26: Stellantrieb
- 27: Antriebsanordnung
- 28: Hydraulikzylinder
- 29: Stellelement
- 30: Führungsanordnung

- 31: Gelenklager
- 32: Bolzen
- 33: Stirnfläche
- 34: Stirnfläche
- 35: Werkzeugaufnahme

- 36: Biegewerkzeug
- 37: Biegewerkzeug
- 43: Stützfläche
- 44: Pfeil
- 46: Schwenkvorrichtung
- 47: Schwenkvorrichtung
- 48: Schwenkarmanordnung
- 49: Gelenkarm
- 50: Gelenkarm

- 51: Gelenkarm
- 52: Endbereich
- 53: Seiten- und/oder Höhenführungsbahn
- 54: Fahrwerk
- 55: Schwenkvorrichtung

- 56: Schwenkachse
- 57: Schwenkachse
- 58: Schwenkachse
- 59: Endbereich
- 60: Dreheinrichtung

- 61: Greifeinrichtung
- 62: Drehachse
- 63: Erfassungseinrichtung
- 64: Auflagevorrichtung
- 65: Pfeil

- 66: Positioniervorrichtung
- 67: Steuer- und Überwachungseinrichtung
- 68: Positionsregelglied
- 69: Verstelleinrichtung

- 71: Stirnfläche
- 72: Pfeil
- 73: Groberkennungskamera
- 74: Feinerkennungskamera
- 75: Diodenlaser

- 76: Beleuchtungseinrichtung
- 77: LED-Leuchteneinheit
- 78: Objektiv
- 79: Rechner
- 80: Abstand

- 83: Kalibrierplatte
- 84: Markierpunkt
- 85: Vakuumgreifeinrichtung
- 86: Saugnapf
- 87: Greiferplatte
- 88: Drehübertrager
- 89: Übertragungselement
- 90: Anschlagvorrichtung

- 91: Führungsanordnung
- 92: Doppelpfeil
- 93: Stelleinheit
- 94: Schlittenanordnung
- 95: Vorschubvorrichtung

- 96: Anschlagfinger
- 97: Doppelpfeil
- 98: Doppelpfeil
- 99: Fingerträger
- 100: Basisschenkel

- 101: Seitenschenkel
- 102: Endbereich
- 103: Führungsnut
- 104: Anschlagelement
- 105: Federanordnung

- 106: Anschlaganordnung
- 107: Ende
- 108: Ausnehmung
- 109: Anschlagfläche
- 110: Längsmittelachse

- 111: Taststift
- 112: Endbereich
- 113: Stirnfläche
- 114: Abstand
- 115: Abstands-Messsensor

- 116: Stirnfläche
- 117: Pfeil
- 118: Anschlagebene
- 119: Distanz
- 120: Vergleicherschaltung

- 121: Wegemesseinrichtung
- 122: Mantelgehäuse
- 123: Dreheinsatz
- 124: Drehantrieb
- 125: Stirnfläche
- 126: Schleifringanordnung
- 127: Anschlussmittel
- 128: Anschlussmittel
- 129: Versorgungsleitung
- 130: Bohrung

- 131: Nut
- 132: Bohrung
- 133: Anschlussbohrung
- 134: Versorgungsbohrung
- 135: Trägerplatte

- 136: Montagewinkel
- 137: LED
- 138: Beleuchtungskopf
- 139: Längsachse
- 140: Lichtaustrittsfläche

- 141: Messvorrichtung
- 142: Bilderfassungsmittel
- 143: CCD-Kamera
- 144: Rechner
- 145: Laserscanner

- 146: Pressenraum
- 147: Linear-Schlittenanordnung
- 148: Koordinaten-Erfassungsvorrichtung
- 149: Triangulationssensor
- 150: Lichtschnittsensor

- 155: Positioniermittel
- 156: Messsystem
- 157: Doppelpfeil
- 158: Referenzkörper
- 159: Referenzmittel

- 160: Bohrung
- 161: Trägerblech
- 162: Messbereich
- 163: Trägerplatte
- 164: Planfläche

- 165: Kamera
- 166: CCD-Kamera
- 167: Objektiv
- 168: Ringleuchte
- 169: Laser-Abstandsmesser
- 170: Referenzgewicht

## Patentansprüche

1. Verfahren zur Positionierung einer Greifeinrichtung (61) einer Handhabungsvorrichtung (4) auf einer Platine (3) bzw. einem Werkteil und Zufuhr der Platine bzw. des Werkteils für einen Biegevorgang in einer Fertigungseinrichtung (1) mit zwei relativ zueinander verstellbaren, mit Biegewerkzeugen (36, 37) versehenen Pressenbalken (15, 16) und mit einer automatisierten, in Richtung einer Längsachse der Pressenbalken (15, 16) auf einem Fahrwerk (54) angeordneten und längs einer Führungsanordnung (91) verfahrbaren Handhabungseinrichtung (4) mit einer Greifeinrichtung (61) auf einer Schwenkarmanordnung (48) der Handhabungsvorrichtung (4) zum Einlegen und Halten der Platine (3) für den Biegevorgang und mit einer Positioniervorrichtung (66) für die Platine (3) und mit einer Steuer- und Überwachungseinrichtung (67) für die Fertigungseinrichtung (1), **dadurch gekennzeichnet, dass** in einem ersten Vorgang in einer Groberkennung ein von einer ersten Kamera (73) einer in einer definierten Position zur Greifeinrichtung (61) in einem Endbereich der Schwenkarmanordnung (43) angeordneten Erfassungseinrichtung (63) erstelltes Bild der Platine (3) mit in einem Rechner (79) für die Platine (3) hinterlegten Daten verglichen und danach mittels eines auf eine Oberfläche der Platine (3) projizierten Laserkreuzes und Triangulations-Rechenoperation im Rechner (79) eine Abstandsbestimmung zwischen der Erfassungseinrichtung (63) und der Platine (3) vorgenommen wird und danach die Handhabungsvorrichtung mit der Erfassungseinrichtung (63) auf einen Abstand für eine in einem zweiten Schritt vorzunehmende Feinerkennung der Platine (3) verstellt wird und für die Feinerkennung bevorzugt bei aufeinanderfolgenden Lichtblitzen von Beleuchtungsköpfen (138) getrennte Bilder der Platine (3), bevorzugt einer Platinensektion erstellt werden die im Rechner (79) durch Überlagerung zu einem Summenbild generiert werden bei dem zur Unterdrückung störender Reflexionen an jedem Pixelpunkt das Minimum dieses Pixelpunktes bei allen aufgenommenen Bildern gewählt wird und aus Umrissdaten des Summenbildes Positionsdaten der Platine (3) errechnet werden und entsprechend den Positionsdaten die Handhabungsvorrichtung (4) mit der Greifeinrichtung (61) für, das Ergreifen der Platine (3) in Position verstellt und die Platine (3) aufgenommen wird.

2. Verfahren nach Anspruch 1, **dadurch gekennzeichnet, dass** ein Abstand zwischen der Erfassungseinrichtung und der Platine bzw. dem Werkteil für die Groberkennung zwischen 500 mm und 2000 mm beträgt.

3. Verfahren nach Anspruch 1, **dadurch gekennzeichnet, dass** ein Abstand zwischen der Erfassungseinrichtung und der Platine bzw. dem Werkteil für die Feinerkennung etwa 300 mm beträgt.

4. Verfahren nach Anspruch 1, **dadurch gekennzeichnet, dass** zur Feinerkennung die Platine bzw. der Werkteil mit einer IR- Lichtquelle der Erfassungseinrichtung beleuchtet wird.

5. Verfahren nach Anspruch 1, **dadurch gekennzeichnet, dass** zur Vermeidung das Bilderfassungsmittel störender Reflexionen das emittierte Licht linear polarisiert wird und das reflektierte in seiner Polarisation unveränderte Licht vor Eintritt in das Bilderfassungsmittel gefiltert wird.

6. Verfahren nach Anspruch 1, **dadurch gekennzeichnet, dass** mit der Feinerkennungskamera auf den Biegewerkzeugen angeordnete die Werkzeugdaten festlegende Codezeichen aufgenommen und mit in der Steuer- und Überwachungseinrichtung für den Fertigungsablauf hinterlegten Werkzeugdaten verglichen werden und die Position des Werkzeuges in Längsrichtung der Pressenbalken durch vermessen von Seitenkanten der Biegewerkzeuge bestimmt wird.

## Claims

1. Method of positioning a gripping device (61) of a manipulation device (4) on a board (3) or a workpiece and feeding the board or workpiece for a bending operation in a manufacturing device (1), with two press beams (15, 16) with bending tools (36, 37) which are displaceable relative to one another and with an automated manipulation device (4) which is disposed on a bogie assembly (54) and can be displaced in the direction of a longitudinal axis of the press beams (15, 16) along a guide system (91), with a gripping device (61) of a pivot arm arrangement (48) of the manipulation device (4) for feeding and holding the board (3) for the bending operation, and with a positioning mechanism (66) for the board (3) and with a control and monitoring system (67) for the manufacturing device (1), **characterised in that**, in a first operation, an image of the board (3) generated as a rough detection by a first camera (73) of a detection system (63) disposed in a defined position with respect to the gripper device (61) in an end region of the pivot arm arrangement (48) is compared with data pertaining to the board (3) stored in a computer (79), after which a distance between the detection system (63) and the board (3) is determined by means of a laser cross projected onto a surface of the board (3) and a triangulation computation in the computer (79), and the manipulation device is then moved with the detection system (63) by a distance for a finer detection of the board (3) to be undertaken in a second step, and separate images of the board (3), preferably of a board section, are generated for the finer detection, preferably with consecutive light discharges from lightings heads (138), which are superimposed in the computer (79) to generate an aggregate image, and in order to suppress disruptive reflections, at each pixel point the minimum of this pixel point on all captured images is selected and position data of the board (3) is calculated from contour data of the aggregate image, and the manipulation device (4) with the gripper device (61) is moved into position for gripping the board (3) in accordance with the position data and the board (3) is picked up.

2. Method as claimed in claim 1, **characterised in that** a distance between the detection system and the board or workpiece for the rough detection is between 500 mm and 2000 mm.

3. Method as claimed in claim 1, **characterised in that** a distance between the detection system and the board or workpiece for the finer detection is approximately 300 mm.

4. Method as claimed in claim 1, **characterised in that** the board or workpiece is illuminated by an IR light source of the detection system for the finer detection.

5. Method as claimed in claim 1, **characterised in that**, in order to prevent disruptive reflections from the image detection means, the emitted light is linearly polarised and the reflected light unchanged in its polarisation is filtered prior to entering the image detection means.

6. Method as claimed in claim 1, **characterised in that** code characters fixing the tool data disposed on the bending tools are captured by the finer detection camera and compared with tool data for the production sequence stored in the control and monitoring system, and the position of the tool in the longitudinal direction of the press beams is determined by measuring side edges of the bending tools.

## Revendications

1. Procédé de positionnement d'un dispositif de préhension (61) d'un dispositif de manoeuvre (4) sur une platine (3) ou une pièce à traiter et acheminement de la platine ou de la pièce à traiter pour un processus de pliage dans un dispositif de fabrication (1) comportant deux barres de pression (15, 16), déplaçables l'une par rapport à l'autre et munies d'outils de pliage (36, 37), et comportant un dispositif de manoeuvre (4) automatisé, qui est monté sur un mécanisme de déplacement (54) dans la direction d'un axe longitudinal des barres de pression (15, 16) et est apte à se déplacer le long d'un système de guidage (91) et qui est muni d'un dispositif de préhension (61), monté sur un système de bras pivotant (48) du dispositif de manoeuvre (4) et destiné à insérer et maintenir la platine (3) pour le processus de pliage, et comportant un dispositif de positionnement (66) pour la platine (3) et comportant un dispositif de commande et de contrôle (67) pour le dispositif de fabrication (1), **caractérisé en ce que** dans une première étape, au cours d'une détection grossière, une image de la platine (3), générée par une première caméra (73) d'un dispositif de détection (63), monté dans une position définie par rapport au dispositif de préhension (61) dans une zone d'extrémité du système de bras pivotant (48), est comparée à des données mémorisées pour la platine (3) dans un ordinateur (79), et ensuite la distance entre le dispositif de détection (63) et la platine (3) est déterminée au moyen d'une croix laser, projetée sur une surface de la platine (3), et d'une opération de calcul par triangulation dans l'ordinateur (79), et ensuite le dispositif de manoeuvre (4) est déplacé avec le dispositif de détection (63) à une distance de la platine (3) pour une détection précise de celle-ci, à effectuer au cours d'une deuxième étape, et en vue de la détection précise sont générées, de préférence avec des flashs successifs de têtes d'éclairage (138), des images séparées de la platine (3), de préférence d'une partie de la platine, lesquelles sont superposées dans l'ordinateur (79) pour former une image cumulée, dans laquelle, pour neutraliser les réflexions gênantes sur chaque point de pixel, a été choisi le minimum de ce point de pixel parmi toutes les images enregistrées, et des données de position de la platine (3) ont été calculées à partir de données de contour de l'image cumulée, et le dispositif de manoeuvre (4) avec le dispositif de préhension (61), destiné à saisir la platine (3), a été déplacé en position conformément aux données de position, et la platine (3) est enregistrée.

2. Procédé selon la revendication 1, **caractérisé en ce que**, pour la détection grossière, une distance entre le dispositif de détection et la platine ou la pièce à plier mesure entre 500 mm et 2 000 mm.

3. Procédé selon la revendication 1, **caractérisé en ce que**, pour la détection fine, une distance entre le dispositif de détection et la platine ou la pièce à plier mesure environ 300 mm.

4. Procédé selon la revendication 1, **caractérisé en ce que**, pour la détection fine, la platine ou la pièce à plier est éclairée par une source lumineuse infrarouge du dispositif de détection.

5. Procédé selon la revendication 1, **caractérisé en ce que** pour éviter que le moyen d'enregistrement d'image émette des réflexions gênantes, la lumière émise est polarisée linéairement et la lumière réfléchie à polarisation inchangée est filtrée avant d'entrer dans le moyen d'enregistrement d'images.

6. Procédé selon la revendication 1, **caractérisé en ce que** des codes, définissant les données des outils de pliage et disposés sur les outils de pliage, sont enregistrés par la caméra de détection précise et sont comparés à des données d'outil mémorisées pour le processus de fabrication dans le dispositif de commande et de contrôle, et la position de l'outil dans le sens longitudinal des barres de pression est déterminée par un processus de mesure des bords longitudinaux des outils de pliage.
